# EUROPEAN PATENT SPECIFICATION

(11) **EP 0 500 902 B1**
(45) Date of publication and mention of the grant of the patent: **05.06.1996**
(21) Application number: 91916955.7
(22) Date of filing: 12.08.1991
(51) Int. Cl.: B65G 47/26, B65G 13/071, B65G 13/073

(54) **HIGH-SPEED ROLLER-WAY**
HOCHGESCHWINDIGKEITSROLLENBAU
CONVOYEUR A GALETS A VITESSE ELEVEE

(30) Priority: 05.09.1990 US 578426
(43) Date of publication of application: 02.09.1992
(73) Proprietor: THE INTERLAKE COMPANIES, INC., Lisle, IL 60532-4387 (US)
(72) Inventor: COLLINS, Ellsworth, H., Mt. Washington, KY 40074 (US); MATTINGLY, James, F., Louisville, KY 40299 (US)
(74) Representative: JENSEN & SON
(86) International application number: PCT/US91/05706
(87) International publication number: WO 92/04261

(56) References cited:
- EP-A- 0 149 694
- EP-A- 0 190 506
- AT-B- 384 595
- BE-A- 870 482
- DE-A- 3 426 598
- GB-A- 2 004 242

## Description

The present invention relates to a line shaft conveyor which is particularly suited to high speed applications.

In the past, most high speed conveyors were made using flat belts or chains to drive the conveyor rollers. These conveyors generally cannot run at rates above 240 feet per minute, due to the limitation in chain speed, bearing limitations, or chain or belt vibrations. These chain and belt drives also had to be broken into sections with separate drives for long conveyors, due to the limited capacity of the chains or belts used to drive the conveyor.

Twisted belt line shaft conveyors are also known in the art. These conveyors do not have to be broken into sections for a long drive as do the belt-driven or chain-driven conveyors, but they cannot be driven at high speeds, because the twisted belts which wrap around the drive shaft and the conveyor rollers have very little surface area contact for driving, and they will slip and fail at high speeds. Such a conveyor is disclosed in Patent No. GB 1561373.

Conveyors are known which use a bevel gear or worm gear drive between the line shaft and the conveyor rollers, but these are expensive to manufacture, difficult to maintain, due to the requirements of lubrication, and not suitable for high speed applications for several reasons. For example, the gear sets require precise location for proper drive on the pitch line to reduce noise and wear. High speed gear sets need an enclosed housing to provide lubrication, which adds expense to the conveyor. Also, it is not possible to compensate for the wear of the gears, so gears would have to be replaced frequently in a high speed application.

Thus, it would be very impractical to drive a high speed conveyor by means of gears.

Some line shaft conveyors are known to use friction wheels to transmit drive from the drive shaft to the conveyor roller, but these conveyors have not been commercially successful. The friction wheel drives typically have at least one wheel which has very little contact surface for driving (i.e., point contact), so the wheels wear out quickly and slip at high speeds. These designs attempt to mimic the twisted belt line shaft conveyors, which, as mentioned above, are not at all suited to high speed applications.

US-A-4,193,492 discloses a lineshaft-driven roller conveyor, in which a tapered drive wheel on the drive shaft mates with a driven wheel mounted on the conveyor frame to drive said driven wheel. On the back of said driven wheel is a rim which contacts the conveyor roller and drives the roller whenever the driven wheel rotates. In order to stop the driving in a zone of the conveyor, a device is used to push the drive wheels for a zone axially along the drive shaft so that they are out of contact with their respective driven wheels.

The present invention relates to a conveyor, comprising a conveyor frame, at least one conveyor roller mounted on said conveyor frame, a drive shaft extending along said conveyor and a drive connection between said drive shaft and said conveyor roller, said drive connection includes drive disconnection means having a first condition in which the conveyor roller is rotatable by the drive shaft, and a second condition in which the drive from the drive shaft to the conveyor roller is disconnected, characterised in that said drive connection includes at least one friction wheel for transmitting the drive to the at least one conveyor roller and a driven wheel driven by said drive shaft, the friction wheel and the driven wheel being rotatable about a drive axis substantially perpendicular to the axis of the drive shaft, said friction wheel being at least substantially co-axial with and driven by the driven wheel through a frictional connection between an inner surface of the friction wheel and an outer surface of the driven wheel.

Thus, the invention provides a high speed conveyor which can operate at much higher speeds than prior art conveyors. It can operate at speeds of 2,3 m/s (450 feet per minute) or higher, as compared with the highest speed of approximately 1,2 m/s (240 feet per minute) in the prior art.

The present invention takes advantage of a line shaft type of drive, so it is not necessary to break the conveyor into pieces with separate drives when the conveyor becomes long.

The present invention provides a smooth, simple drive, which is easy to maintain and is quiet, eliminating the noise and maintenance problems of prior art drives.

The present invention provides for good surface contact of the driving members and provides a spring force which keeps the driving members in contact with each other and which compensates for wear.

The present invention provides a high speed drive arrangement which can be driven as easily in the backward direction as in the forward direction and therefore can be reversed as needed, without any problems involving chain or belt tensioning.

The present invention also provides a means for stopping the driving of the conveyor rollers, creating an accumulating conveyor.

### DESCRIPTION OF THE DRAWINGS

Figure 1 is a schematic top view of a conveyor made in accordance with the present invention;
Figure 2 is a side view thereof;
Figure 3 is a view taken along the section 3-3 of Figure 1;
Figure 4 is a view taken along the section 4-4 of Figure 3;
Figure 5 is an exploded perspective view of the first friction wheel, which is shown in Figures 1-4;
Figure 6 is a view taken along the section 6-6 of Figure 1;
Figure 7 is the same view as Figure 6 but with the brake applied to stop the zone of rollers;
Figure 8 is a broken-away perspective view of the braking arrangement shown in Figures 6 and 7;
Figure 9 is a sectional view through the semi-cylindrical portions of the first friction wheel;
Figure 10 is a top view of a portion of the conveyor, showing a second embodiment of the invention, with the side rail, the second friction wheel, and the drive wheel shown in section;
Figure 11 is a view taken along the section 11-11 of Figure 10; and
Figure 12 is the same view as Figure 10, except that the drive wheel has disengaged from the second friction wheel.

### DESCRIPTION OF THE PREFERRED EMBODIMENTS

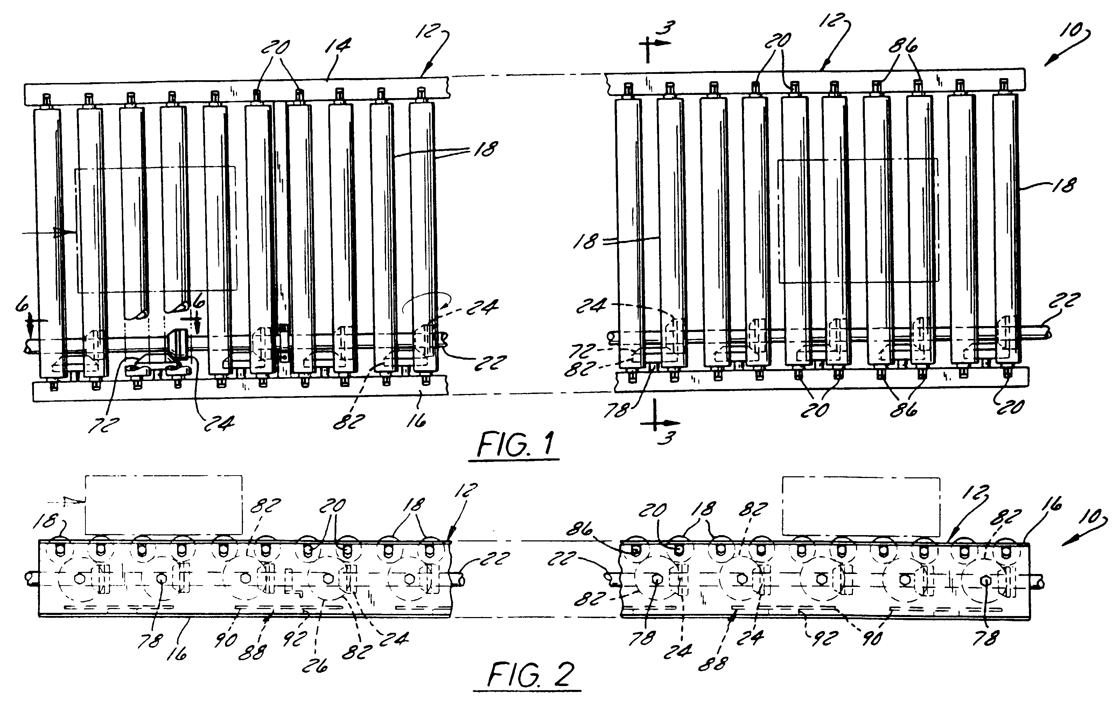

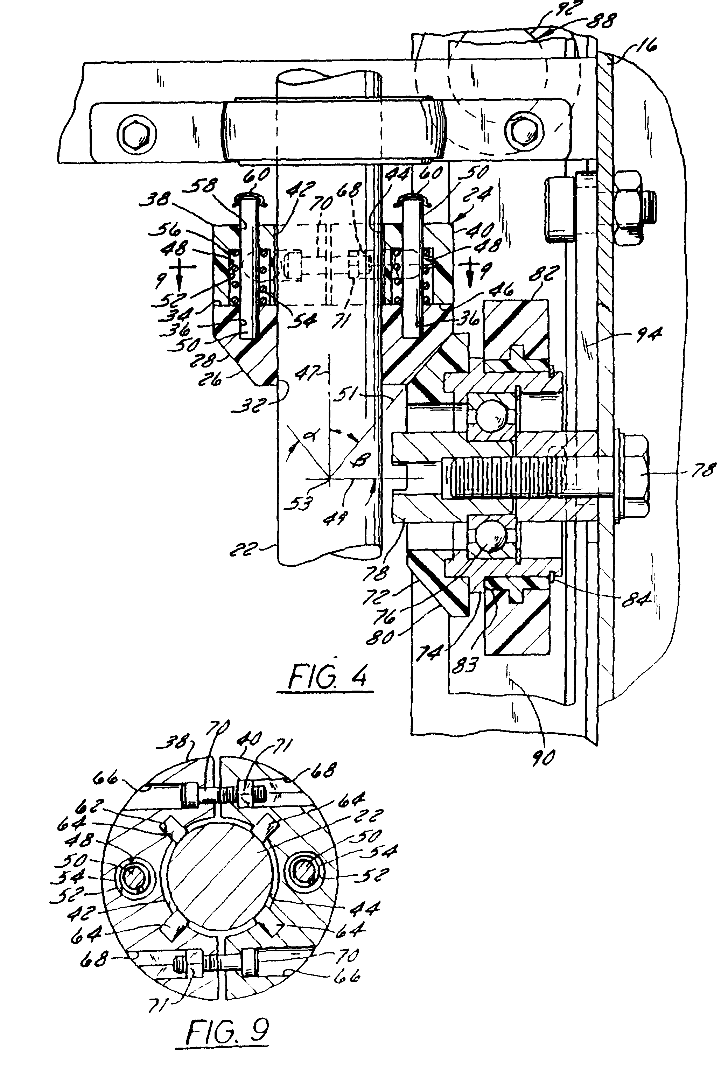

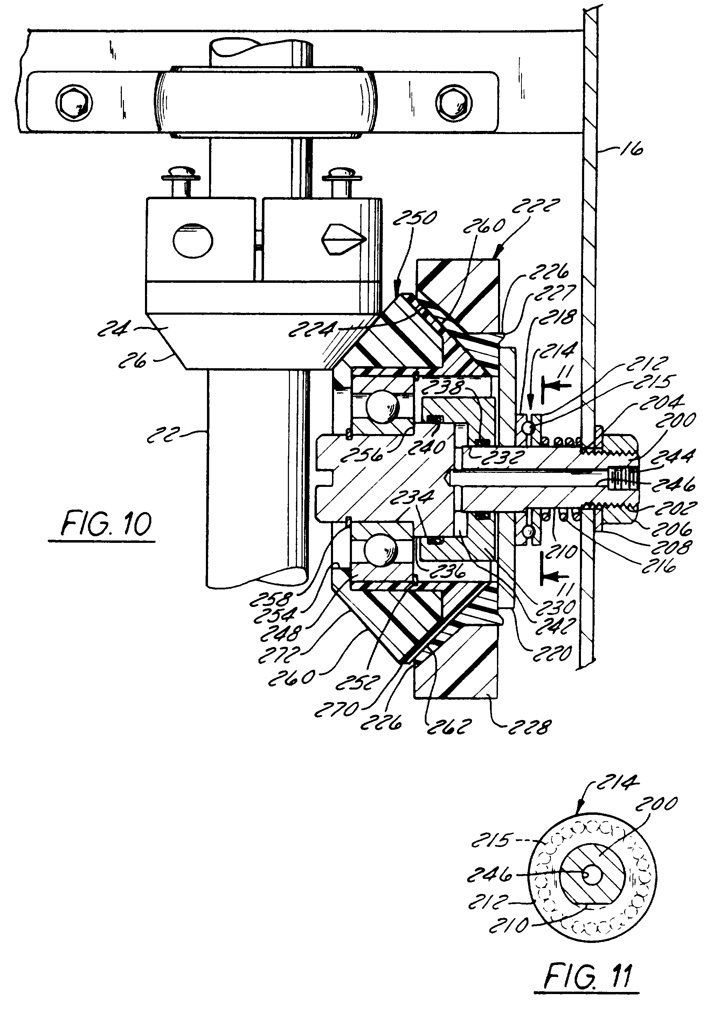

The conveyor 10 of the present invention has two embodiments. The first embodiment is shown in Figures 1-9, and the second embodiment is shown in Figures 10-12. The first embodiment of the conveyor is made up of a conveyor frame 12, with a left side rail 14 and a right side rail 16 and a plurality of conveyor rollers 18 having shafts 20 whose left and right ends are mounted in the left and right side rails, respectively. The axes of rotation of the conveyor rollers 18 are substantially perpendicular to the left and right side rails 14, 16 and to the direction of travel of articles carried by the conveyor 10, as indicated by the arrows in Figures 1, 2, and 6.

A motor (not shown) drives a drive shaft 22. The drive shaft 22 lies below the conveyor rollers 18 and has an axis which is substantially parallel to the direction of travel. On the drive shaft 22 at regular intervals are mounted first friction wheels 24. As shown in this embodiment, there is one first friction wheel 24 for every two conveyor rollers 18. The first friction wheels 24 are coaxial with the drive shaft 22. Each first friction wheel 24 has a beveled end 26, which is beveled at an angle alpha from the axis of the drive shaft 22. In this embodiment, the angle alpha is 40 degrees. The first friction wheel 24 is preferably made of a hard material such as steel or nylon.

The first friction wheels are preferably made in three pieces -- the first piece 28 is substantially cylindrical and includes the beveled end 26. This first piece 28 will be referred to as the beveled piece. The beveled piece 28 has a central bore 32, which is slightly larger than the diameter of the drive shaft 22. It has a flat back surface 34, which lies in a plane that is perpendicular to the axis of the central bore 32. The back surface 34 defines two cylindrical recesses 36. The second piece 38 and third piece 40 of each first friction wheel 24 are identical to each other. Each cf those pieces 38, 40 defines a semi-cylindrical inner surface 42, so that, when the second and third pieces 38, 40 are brought together, they define a cylindrical central bore 44. The semi-cylindrical pieces 38, 40 actually are each slightly less than half a cylinder, so that they can be clamped together to apply force to grip the shaft 22. Each of the semi-cylindrical pieces 38, 40 also defines a flat front surface 46, which is intended to abut the flat back surface 34 of the beveled piece 28, and each of the flat front surfaces 46 defines a bore 48, which can be aligned with the cylindrical recesses 36 in the bevel piece 28 to receive pins 50. The cylindrical recesses 36 in the bevel piece 28 receive the pin 50 with a press fit, so the pins 50 are retained on the bevel pieces 28. The cylindrical bores 48 in the semi-cylindrical pieces 38, 40 have an enlarged entrance portion 52, which permits a spring 54 to be mounted around each pin 50. The springs 54 apply a force which tends to push the bevel piece 28 away from the semi-cylindrical pieces 38, 40. This spring force keeps the bevel piece 28 in driving contact with a second friction wheel, which will be described later. Inside the enlarged entrance openings 52, the cylindrical bores 48 have a reduced diameter, which provides a shoulder 56 for the spring to push against. The reduced diameter portion 58 of the cylindrical bores 48 is large enough to permit the pin 50 to slide relative to the semi-cylindrical pieces 38, 40. Caps 60 are press fit onto the ends of the pins 50 to prevent the pins from sliding out of the semi-cylindrical pieces 38, 40.

Each of the semi-cylindrical pieces 38, 40 also has two radial recesses 62, which receive an insert 64. Each insert 64 is slightly longer than its radial recess 62, so that the insert projects slightly from the semi-cylindrical inner surface 42 of its respective piece 38, 40.

Each of the semi-cylindrical pieces 38, 40 also has a cylindrical bolt-receiving bore 66, which is substantially perpendicular to the axis of the central bore 44, and a hexagonal bore 68, which can be aligned with the bolt-receiving bore 66 of the other semi-circular piece 38, 40. When the bolt-receiving bore 66 of each piece 38, 40 is aligned with the hexagonal bore 68 of the opposite piece 40, 38, bolts 70 and hexagonal nuts 71 are inserted into their respective bolt-receiving bores 66 and hexagonal bores 68 and are threaded together to clamp the pieces 38, 40 onto the shaft 22. (The nuts 71 may be molded as an integral part of the bores 68 as an alternative to the embodiment shown here.) As the bolts 70 are tightened, the inserts 64 contact the drive shaft 22 and press against it. The inserts 64 are preferably made of polyurethane, so that, when the bolts 70 are tightened, the inserts apply a force to the drive shaft 22 which causes the semi-cylindrical pieces 38, 40 to be fixed to the drive shaft 22. The pins 50 cause the beveled piece 28 of the first wheel 24 to rotate with the semi-circular pieces 38, 40, which are fixed to and rotate with the drive shaft. The springs 54 cause the beveled piece 28 of the first friction wheel 24 to be biased in the direction of the beveled end 26.

On the right side rail 16 of the conveyor 10 is mounted a plurality of second friction wheels 72, one for every first friction wheel 24. These second friction wheels 72 are molded onto a hub 74, which is mounted on a bearing 76, which, in turn, is mounted on a stub shaft 78 that is bolted to the right side rail 16. In this manner, the second friction wheel 72 is free to rotate about the axis of the stub shaft 78, which is substantially perpendicular to the right side rail, but the second friction wheel 72 is otherwise in a fixed position relative to the conveyor frame 12, in that it cannot move toward or away from the side rail 16 or up or down relative to the side rail 16. The second friction wheel 72 has a beveled end 80, which lies at an angle beta relative to its axis of rotation. In this embodiment, the angle beta is 50 degrees. As is shown in the drawings, the beveled ends 26, 80 of the first and second friction wheels 24, 72, respectively, have a frustro-conical shape.

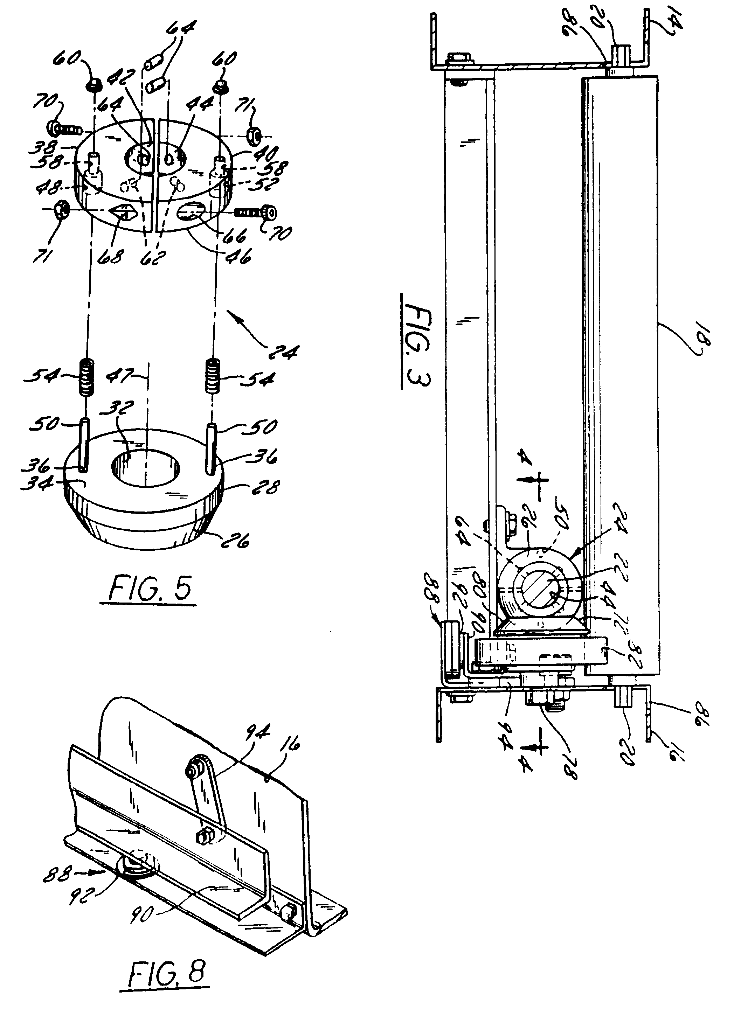

The sum of the angles alpha and beta, which are the angles of the bevels on the first and second friction wheels 24, 72, is equal to the angle between the axes of the first and second friction wheels. Also, the beveled surfaces define a line of contact 51, which, when extended, intersects the point of intersection of the axes 47, 49 of the first and second friction wheels, respectively, as shown at the point 53 in Figure 4. In this embodiment, the axes 47 and 49 of the drive shaft 22 and the stub shaft 78, respectively, intersect at an angle of 90 degrees, and the angles alpha (40 degrees) and beta (50 degrees) are complementary angles, the sum of which is 90 degrees. It is important that the sum of the angles alpha and beta be equal to the angle between the axes of the first and second friction wheels 24, 72, so that the beveled ends 26, 80 mate with at least line contact between them. This provides true rolling contact between the first and second friction wheels and avoids the problems of slippage and failure encountered in prior art designs which have less than line contact. Without this good surface area of contact between the two friction wheels, this conveyor could not operate at such high speeds.

It is also important that the first friction wheel 24 has a spring force biasing it in the direction of the second friction wheel 72, so that, as the beveled faces wear, there will still be good contact between the first and second friction wheels over a large surface area.

A third friction wheel 82 is mounted on the hub 74 between a shoulder 83 on the hub 74 and a snap ring 84 which snaps into a recess in the hub 74. The third friction wheel 82 (or drive wheel) has a clearance fit with the hub 74 and is centered below two of the conveyor rollers 18, contacting both of those conveyor rollers 18, with line contact between the cylindrical outer surface of the third friction wheel 82 and the cylindrical outer surface of each of those conveyor rollers 18.

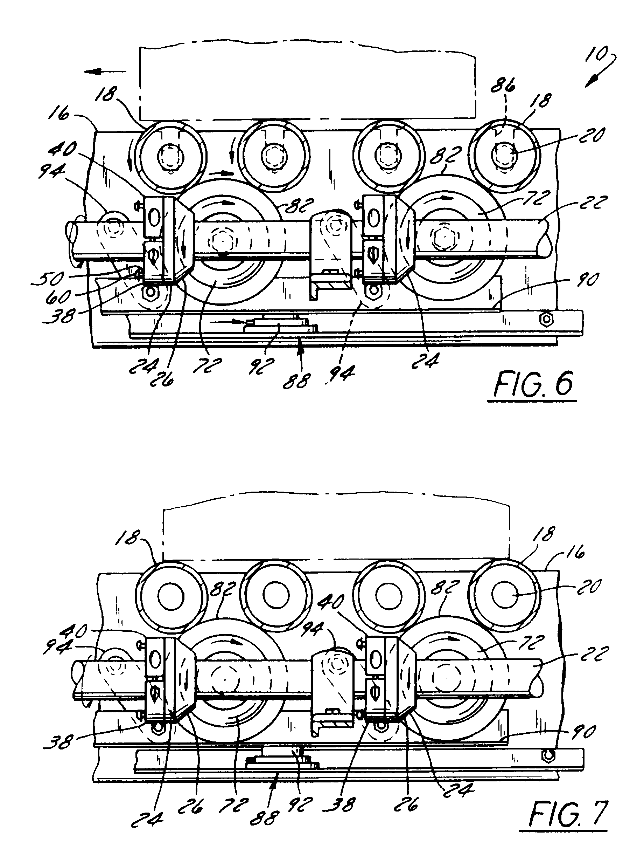

The shafts 20 of the conveyor rollers 18 ride in vertical slots 86 in the left and right side rails 14, 16 (shown in Figure 6), and generally do not reach the bottom of the slots 86, so that the weight of each roller 18 is carried on its respective third friction wheel 82. Of course, the weight of any product that is being carried on the conveyor roller 18 will also be supported by the third friction wheel 82. Since the amount of friction between the third friction wheel 82 and the hub 74 and the amount of friction between the conveyor roller 18 and the third friction wheel 82 increases as the weight of the conveyor roller increases, the amount of friction available to drive the rollers 18 increases as the load increases. This mounting arrangement ensures that there will always be enough friction to drive the conveyor rollers 18, even when they are under heavy loads.

To summarize the drive arrangement in this conveyor: A motor (not shown) drives the drive shaft 22. The rotating drive shaft drives the first friction wheels 24, which are biased toward the second friction wheels 72, and which have contact with the second friction wheels 72 along a line, giving them good surface area contact for driving the second friction wheels 72. The second friction wheels 72 drive their respective hubs 74, which, in turn, drive the third friction wheels 82, and the third friction wheels 82 drive the conveyor rollers 18. The drawings shown here have the drive shaft always rotating in one direction and the articles on the conveyor always moving from left to right. However, the direction of rotation of the drive shaft 22 could readily be reversed, thereby reversing the direction of travel of the articles on the conveyor. Such a simple reversal of direction of drive is not available on prior art drive arrangements.

In many cases, it will be advantageous to operate this high speed conveyor as an accumulating conveyor. In this situation, means can be provided for stopping the conveyor rollers 18 in order to accumulate products on the conveyor. If this conveyor is to operate as an accumulating conveyor, it will preferably include a brake mechanism 88 for stopping the rotation of the third friction wheels 82, which will also cause the conveyor rollers 18 which contact the stopped friction wheels 82 to stop.

The brake mechanism is shown in Figures 3, 6, 7, and 8. Each brake mechanism 88 in the embodiment shown here is designed to stop two of the third friction wheels (or drive wheels) 82, which stops four of the conveyor rollers 18. The four conveyor rollers controlled by the brake 88 are then said to be a zone. The brake 88 includes a flat friction bar 90, mounted on a piston-cylinder arrangement 92 (or on some other type of actuator). There are two arms 94 (shown in Figures 6-8) which are bolted to the conveyor frame 12 and to the friction bar 90. The arms 94 are mounted so as to pivot relative to the conveyor frame 12 and relative to the friction bar 90, and the distance between the pivot points on each of the arms 94 is the same. As the arms pivot from a lowered, non-braking position, as shown in Figure 6, to an upper, braking position, as shown in Figure 7, the equal-length arms 94 provide a parallelogram effect, so that, as the friction bar 90 is pushed upward by the piston 92, the friction bar 90 remains parallel to the third friction wheels 82.

There are sensors (not shown) located at intervals along the conveyor 10, as is known in the art for accumulation conveyors. When the sensors sense a back-up of products, they begin to cause fluid to enter the cylinders 92 in the zones in which products are to accumulate, causing the friction bars 90 for those zones of the conveyor 10 to move upward until they contact their respective drive wheels 82, causing those drive wheels 82 to stop rotating. These drawings show each friction bar 90 contacting two drive wheels 82, but it would be possible for each friction bar to contact any desired number of drive wheels 82, depending upon the desired length of the zone. The clearance fit between the third friction wheels 82 and their hubs 74 facilitates this process, permitting the hubs 74 to continue rotating freely even when the brake is applied, so as not to interfere with the driving of the other parts of the conveyor 10.

Figures 10-12 show a second embodiment of the invention, in which a different type of second friction wheel and drive wheel are mounted on the support shafts. The rest of the conveyor, including the drive shaft, the first friction wheels, and the conveyor rollers remain the same as in the first embodiment, except that the conveyor rollers 18 ride at the bottom of the slots 86. As in the first embodiment, this embodiment contemplates a number of drive wheels, with each of the drive wheels located so as to contact and drive two conveyor rollers. In this second embodiment, the support shaft (second friction wheel shaft) 200 has a threaded end 202, which terminates at a shoulder 204, which is larger than the opening in the side rail 16 through which the support shaft 200 is mounted. The support shaft is mounted on the side rail 16 by means of a nut 206 and lock washer 208, which push the shoulder 204 against the side rail 16.

Beyond the shoulder 204 is a portion of the support shaft which has a D-shaped cross-section 210, and the right half 212 of a thrust bearing 214 is mounted on that D-shaped portion of the support shaft and has a corresponding D-shaped cross-section, so as to prevent rotation of the right half 212 of the thrust bearing 214 relative to the support shaft 200. The left half 218 of the thrust bearing 214 has a cylindrical cross-section and is mounted on a portion of the support shaft 200 which is cylindrical and has the same diameter as the D-shaped portion of the shaft 200. Balls 215 are located between the left and right portions of the thrust bearing 214 and permit the left portion to rotate relative to the right portion without excessive friction or wear. A C-cup (not shown) may be added to surround the thrust bearing to keep out dust particles. A spring 216 is mounted on the support shaft 200 between the side rail 16 and the right half 212 of the thrust bearing. If the spring 216 provides enough friction force on the right side of the thrust bearing to prevent it from rotating, the D-shaped cut on the shaft and thrust bearing can be eliminated, making the pieces cylindrical instead. The primary function of the spring 216 is to bias the drive wheel into engagement with the second friction wheel, as will be explained later.

The next element mounted on the support shaft is a ring 220, which is preferably made of steel. The ring 220 has a cylindrical inside diameter, which is about 0.001 inches (.025 mm) larger in diameter than the cylindrical portion of the support shaft 200, and an outside diameter which is large enough to have good surface contact with the right side of the drive wheel 222. The drive wheel 222 has a cylindrical outer surface, which is in friction contact with two of the conveyor rollers, as in the first embodiment. It has a beveled (frustro-conical) inner surface 224, which is beveled at an angle of approximately 45 degrees to the axis of the support shaft. The drive wheel 222 is preferably made of two materials which are molded together to form a single piece. The inner piece 226, which contacts the second friction wheel 250 and the ring 220, is preferably made of Delrin, and the outer piece 228, which contacts the conveyor rollers, is preferably made of polyurethane. The inner piece 226 defines an annular shoulder 227 with a tapered inner surface which fits around the outside diameter of the ring 220.

The next element mounted on the support shaft 200 is an air pressure ring 230, which has a small inside diameter portion 232 which mounts on the same portion of the support shaft 200 as the ring 220, and a large inside diameter portion 234, to the left of the small inside diameter portion, which mounts on a large diameter portion 236 of the support shaft 200. Both the small inside diameter portion 232 and the large inside diameter portion 234 of the pressure ring member 230 seal against their respective portions of the support shaft 200 by means of O-ring seals 238, 240, respectively. An annular chamber 242 is formed between the small seal 238 and the large seal 240. The left and inner walls of the chamber are formed by the support shaft 200, and the right and outer walls of the chamber 242 are formed by the pressure ring 230. The chamber 242 is in fluid communication with an air inlet 244 at the end of the support shaft 200 through a conduit 246 in the support shaft 200.

To the left of the pressure ring member 230 is a bearing 248, on which is mounted the second friction wheel 250. The outer race of the bearing 248 is mounted between a snap ring 252 and a shoulder 254 on the inside of the second friction wheel 250, and the inner race of the bearing is mounted between a shoulder 256 and a snap ring 258 on the large-diameter portion of the outer surface of the support shaft 200.

The second friction wheel 250 has a beveled (frustro-conical) left end surface 260, as in the first embodiment, and a beveled (frustro-conical) right surface or outer surface 262, which lies at a 45 degree angle to the axis of the support shaft 200 (the same angle as the inner surface of the drive wheel 222), and which mates with the inner tapered surface of the drive wheel 222 along a large surface area. The second friction wheel 250 is preferably also molded of two different materials. The right portion 270, which has friction contact with the drive wheel 222, is preferably made of steel or Delrin, and the left portion 272, which is in friction contact with the first friction wheel, is preferably made of polyurethane.

Operation of the second embodiment is as follows: The drive shaft 22 rotates, causing the first friction wheel 24 to rotate, as in the first embodiment. The second friction wheel 250 is in friction contact with the first friction wheel, so the second friction wheel also rotates. Under normal driving conditions, the spring 216 pushes against the side rail 16 and against the thrust bearing 214, causing the thrust bearing 214 to push against the ring 220, which, in turn, pushes against the right surface of the drive wheel 222, forcing the drive wheel 222 into friction engagement with the second friction wheel 250 and with the conveyor rollers, thereby causing the drive wheel to rotate and drive the conveyor rollers. The drive wheel 222 also causes the ring 220 and the left side 218 of the thrust bearing 214 to rotate.

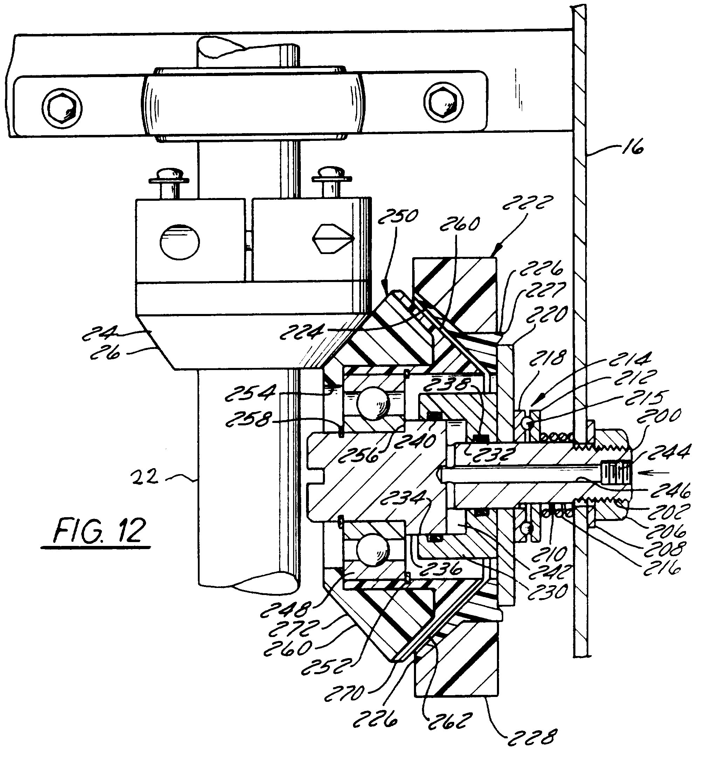

When pressurized air is forced into the air inlet 244 of the support shaft 200, it travels through the conduit 246 and into the chamber 242. The pressurized air pushes against the walls of the chamber 242, causing the pressure ring 230 to shift about 1/8 inch 3.175 mm to the right, pushing against the ring 220 and overcoming the force of the spring 216 so as to permit the drive wheel 222 to move to the right, as shown in Figure 12. As the drive wheel 222 shifts to the right, it moves down slightly, out of contact with the conveyor rollers. The drive wheel 222 then contacts the second friction wheel only at the uppermost point (not shown), and there is a gap between the drive wheel 222 and the second friction wheel 250 around the rest of their beveled surfaces. Because there is no load on the drive wheel 222, it can be driven in a freewheeling mode by the small amount of friction from the point contact with the second friction wheel 250. However, there is not sufficient friction between the second friction wheel 250 and the drive wheel 222 to transfer a driving force to the conveyor rollers, even if the drive wheel 222 did contact the conveyor rollers. Thus, when the pressure ring 230 overcomes the spring bias and shifts to the right, it disconnects the train of driving elements, so the conveyor rollers driven by the drive wheel 222 stop rotating and begin to accumulate. When the controller wishes to resume driving that section of the conveyor, the air pressure is vented from the chamber 242, through the conduit 246 and the inlet 244, and the spring force again shifts the drive wheel to the left and upward, causing the drive wheel 222 to engage the second friction wheel 250 and the conveyor rollers, so the drive wheel again drives the conveyor rollers. If the conveyor is not intended to be used to accumulate products, the air pressure ring 230 can be eliminated. Then, after the conveyor is installed, it can readily be converted to serve as an accumulating conveyor simply by inserting the pressure ring 230 or by replacing the complete support shaft assembly.

It will be obvious to those skilled in the art that modifications may be made to the embodiments described above without departing from the scope of the present invention.

## Claims

1. A conveyor, comprising a conveyor frame (16), at least one conveyor roller (18) mounted on said conveyor frame (16), a drive shaft (22) extending along said conveyor and a drive connection (24, 72, 74, 82 and 24, 250, 222) between said drive shaft (22) and said conveyor roller (18), said drive connection (24, 72, 74, 82 and 24, 250, 222) includes drive disconnection means having a first condition in which the conveyor roller (18) is rotatable by the drive shaft (22), and a second condition in which the drive from the drive shaft (22) to the conveyor roller (18) is disconnected, characterised in that said drive connection includes at least one friction wheel (82, 222) for transmitting the drive to the at least one conveyor roller (18) and a driven wheel (72, 74, 250) driven by said drive shaft (22), the friction wheel (82, 222) and the driven wheel (72, 250) being rotatable about a drive axis substantially perpendicular to the axis of the drive shaft (22), said friction wheel (82, 222) being at least substantially co-axial with and driven by the driven wheel (72, 74, 250) through a frictional connection between an inner surface of the friction wheel (82, 222) and an outer surface of the driven wheel (74, 250).

2. A conveyor as claimed in claim 1 wherein said friction wheel (82, 222) is selectively shiftable relative to the driven wheel (72, 250) to provide said first and second conditions.

3. A conveyor according to claim 2 wherein the drive disconnection means comprises means to enable the drive wheel (82, 222) to shift perpendicular to said drive axis.

4. A conveyor as claimed in claim 3 wherein the friction wheel (222) is disconnected from said roller conveyor (18) when shifted perpendicularly to the drive axis.

5. A conveyor as claimed in any one of claims 1 to 4 wherein said driven wheel (250) defines a drive wheel engaging surface (262) and said friction wheel (222) defines a driven-wheel-engaging surface (260) which engages the drive wheel engaging surface (262) of said driven wheel (250);
and further comprising, a friction wheel biasing means (216) located between said conveyor frame (16) and said friction wheel (222) to bias the engaging surface (260) of the friction wheel (222) into driving engagement with the corresponding engaging surface (262) of the driven wheel (250);
and means for opposing said friction wheel biasing means (216) so as to disengage said friction wheel (222) from driving engagement by shifting said friction wheel (222) relative to said driven wheel (250).

6. A conveyor as claimed in any one of claims 1 to 5 further comprising a friction wheel (24) mounted on said drive shaft (22), which friction wheel (24) engages said driven wheel (72, 250) so as to drive said driven wheel (72, 250).

7. A conveyor as claimed in claim 6 wherein said friction wheel (24) and said driven wheel (250) are both friction wheels having tapered engaging surfaces.

8. A conveyor according to any one of claims 1 to 3 wherein said friction wheel is biased into frictional drive contact with said driven wheel, the drive disconnection means comprising brake means (88, 90) selectively engageable with said friction wheel (82) to brake said friction wheel (82), and to break said frictional drive contact with said friction wheel (82).

9. A conveyor as claimed in claim 8 wherein said driven wheel (72) is rotatably fast with a hub (74), said friction wheel (82) being mounted on said hub (74) with a clearance fit and being rotatable relative to the said hub (74).

10. A conveyor according to any one of the preceding claims comprising a plurality of said conveyor rollers (18) mounted on said conveyor frame (14, 16), and a plurality of said friction wheels (82), wherein each of said friction wheels (82) contacts and drives two of said conveyor rollers (68).

11. A conveyor as claimed in any one of claims 8 to 10 wherein each of said conveyor rollers (18) has a supporting shaft (20) which rides in slots (86) in said conveyor frame (14, 16), such that the weight of each conveyor roller (18) is supported on said friction wheel (82) so that the friction force between the friction wheel (82) and the hub (74) increases as the weight of articles on the conveyor rollers (18) increases.

## Patentansprüche

1. Förderer, bestehend aus einem Förderrahmen (16), mindestens einer auf dem Förderrahmen (16) montierten Transportrolle (18), einer Antriebswelle (22), die entlang des Förderers verläuft, und einer Antriebsverbindung (24, 72, 74, 82 und 24, 250, 222) zwischen der Antriebswelle (22) und der Transportrolle (18), wobei die Antriebsverbindung (24, 72, 74, 82 und 24, 250, 222) ein Mittel zur Unterbrechung des Antriebs einschließt, welches einen ersten Zustand umfaßt, in dem die Transportrolle (18) durch die Antriebswelle (22) gedreht werden kann, und einen zweiten Zustand, in dem der Antrieb zwischen der Antriebswelle (22) und der Transportwelle (18) unterbrochen ist, dadurch gekennzeichnet, daß die Antriebsverbindung mindestens ein Reibrad (82, 222) zur Übertragung der Antriebskraft auf die mindestens eine Transportrolle (18) und auf ein angetriebenes Rad (72, 74, 250) umfaßt, das durch die Antriebswelle (22) angetrieben wird, sowie dadurch, daß das Reibrad (82, 222) und das angetriebene Rad (72, 250) um eine Antriebsachse drehbar sind, die im wesentlichen rechtwinklig zur Achse der Antriebswelle (22) verläuft, und dadurch, daß das Reibrad (82, 222) zumindest im wesentlichen koaxial zum angetriebenen Rad (72, 74, 250) ist und durch dieses über eine Reibverbindung zwischen einer inneren Oberfläche des Reibrads (82, 222) und einer äußeren Oberfläche des angetriebenen Rads (74, 250) angetrieben wird.

2. Förderer nach Anspruch 1, wobei das Reibrad (82, 222) selektiv relativ zum angetriebenen Rad (72, 250) beweglich ist, so daß der erste und zweite Zustand erzielbar sind.

3. Förderer nach Anspruch 2, wobei das Mittel zur Unterbrechung des Antriebs ein Mittel umfaßt, das ein Verschieben des Antriebsrads (82, 222) im rechten Winkel zur Antriebsachse ermöglicht.

4. Förderer nach Anspruch 3, wobei das Reibrad (222) von der Transportrolle (18) getrennt wird, wenn es im rechten Winkel zur Antriebsachse verschoben wird.

5. Förderer nach einem der Ansprüche 1 bis 4, wobei das angetriebene Rad (250) eine Eingriffsoberfläche (262) für das Antriebsrad definiert und das Reibrad (222) eine Eingriffsoberfläche (260) für das angetriebene Rad definiert, die in die Eingriffsoberfläche (262) für das Antriebsrad des angetriebenen Rads (250) eingreift;
weiterhin ausgestattet mit einem zwischen dem Förderrahmen (16) und dem Reibrad (222) befindlichen Mittel (216) zur Beeinflussung des Reibrads, das die Eingriffsoberfläche (260) des Reibrads (222) so beeinflußt, daß eine Antriebsverbindung mit der entsprechenden Eingriffsoberfläche (262) des angetriebenen Rads (250) hergestellt wird;
und einem Mittel zum Ausgleich des Mittels (216) zur Beeinflussung des Reibrads, so daß das Reibrad (222) aus der Antriebsverbindung gelöst wird, indem das Reibrad (222) relativ zum angetriebenen Rad (250) verschoben wird.

6. Förderer nach einem der Ansprüche 1 bis 5, der zusätzlich ein an der Antriebswelle (22) montiertes Reibrad (24) umfaßt, wobei das Reibrad (24) in das angetriebene Rad (72, 250) eingreift, um das angetriebene Rad (72, 250) anzutreiben.

7. Förderer nach Anspruch 6, wobei sowohl das Reibrad (24) als auch das angetriebene Rad (250) Reibräder mit sich verjüngenden Eingriffsoberflächen sind.

8. Förderer nach einem der Ansprüche 1 bis 3, wobei das Reibrad so beeinflußt wird, daß ein antreibender Reibungskontakt mit dem angetriebenen Rad entsteht, wobei das Mittel zur Unterbrechung des Antriebs ein Bremsmittel (88, 90) umfaßt, das selektiv mit dem Reibrad (82) in Eingriff gebracht werden kann, um das Reibrad (82) abzubremsen und den antreibenden Reibungskontakt mit dem Reibrad (82) zu unterbrechen.

9. Förderer nach Anspruch 8, wobei das angetriebene Rad (72) mit hoher Geschwindigkeit mit einer Nabe (74) drehbar ist, wobei das Reibrad (82) mit einer Spielpassung auf der Nabe (74) montiert und relativ zur Nabe (74) drehbar ist.

10. Förderer nach einem der vorstehenden Ansprüche mit mehreren Transportrollen (18), die auf dem Förderrahmen (14, 16) montiert sind, und mehreren Reibrädern (82), wobei jedes der Reibräder (82) mit zwei der Transportrollen (68) in Kontakt steht und diese antreibt.

11. Förderer nach einem der Ansprüche 8 bis 10, wobei jede der Transportrollen (18) eine Stützwelle (20) besitzt, die in Schlitzen (86) im Förderrahmen (14, 16) sitzt, so daß das Gewicht der einzelnen Transportrollen (18) durch die Reibräder (82) getragen wird, so daß die Reibungskraft zwischen dem Reibrad (82) und der Nabe (74) mit zunehmendem Gewicht der Artikel auf den Transportrollen (18) zunimmt.

## Revendications

1. Un transporteur, comprenant un cadre de transporteur (16), au moins un rouleau de transporteur (18) monté sur ledit cadre de transporteur (16), un arbre d'entraînement (22) s'étendant le long dudit transporteur et un accouplement de transmission (24, 72, 74, 82 et 24, 250, 222) entre ledit arbre d'entraînement (22) et ledit rouleau de transporteur (18), ledit accouplement de transmission (24, 72, 74, 82 et 24, 250, 222) comprenant un moyen de déconnexion ayant une première condition dans laquelle le rouleau de transporteur (18) est entraîné en rotation par l'arbre d'entraînement (22), et une deuxième condition dans laquelle la force d'entraînement de l'arbre d'entraînement (22) au rouleau de transporteur (18) est déconnectée, caractérisé en cela que ledit accouplement de transmission comprend au moins une roue de friction (82, 222) pour transmettre l'entraînement à au moins un rouleau de transporteur (18) et une roue menée (72, 74, 250) entraînée par ledit arbre d'entraînement (22), la roue de friction (82, 222) et la roue menée (72, 250) tournant sur un axe substantiellement perpendiculaire à l'axe de l'arbre d'entraînement (22), ladite roue de friction (82, 222) étant pour le moins substantiellement coaxiale à la roue menée et étant entraînée par celle-ci (72, 74, 250) par le biais d'une connexion par friction entre une surface intérieure de la roue de friction (82, 222) et une surface extérieure de la roue menée (74, 250).

2. Un transporteur selon la revendication 1 dans lequel ladite roue de friction (82, 222) est déplacée par sélection par rapport à la roue menée (72, 250) pour produire la première et la deuxième conditions susmentionnées.

3. Un transporteur selon la revendication 2 dans lequel le moyen de déconnexion comprend des moyens permettant à la roue d'entraînement (82, 222) de se déplacer de façon perpendiculaire par rapport audit axe d'entraînement.

4. Un transporteur selon la revendication 3 dans lequel la roue de friction (222) est déconnectée dudit transporteur à rouleaux (18) lorsqu'elle est déplacée perpendiculairement par rapport à l'axe d'entraînement.

5. Un transporteur selon n'importe laquelle des revendications 1 à 4 dans lequel ladite roue menée (250) définit une surface d'engagement de roue d'entraînement (262) et ladite roue de friction (222) définit une surface d'engagement de roue menée (260) qui engage la surface d'engagement de roue d'entraînement (262) de ladite roue menée (250) ;
et comprenant en outre, un moyen permettant d'influencer la roue de friction (216) situé entre ledit cadre du transporteur (16) et ladite roue de friction (222) pour transformer la surface d'engagement (260) de la roue de friction (222) en engagement d'entraînement avec la surface d'engagement correspondante (262) de ladite roue menée (250) ;
et un moyen s'opposant audit moyen influençant la roue de friction (216) pour désengager ladite roue de friction (222) de l'engagement d'entraînement en déplaçant ladite roue de friction (222) par rapport à ladite roue menée (250).

6. Un transporteur selon n'importe laquelle des revendications 1 à 5 comprenant en outre une roue de friction (24) montée sur ledit arbre d'entraînement (22), laquelle roue de friction (24) engage ladite roue menée (72, 250) de façon à entraîner ladite roue menée (72, 250).

7. Un transporteur selon la revendication 6 dans lequel ladite roue de friction (24) et ladite roue menée (250) sont toutes deux des roues de friction ayant des surfaces d'engagement coniques.

8. Un transporteur selon n'importe laquelle des revendications 1 à 3 dans lequel ladite roue de friction est mise en contact d'entraînement par friction avec ladite roue menée, le moyen de déconnexion de l'entraînement comprenant un moyen de freinage (88, 90) applicable par sélection sur ladite roue de friction (82) pour freiner ladite roue de friction (82), et pour interrompre ledit contact d'entraînement par friction avec ladite roue de friction (82).

9. Un transporteur selon la revendication 8 dans lequel ladite roue menée (72) tourne solidairement avec un moyeu (74), ladite roue de friction (82) étant montée sur ledit moyeu (74) avec un jeu et pouvant tourner par rapport audit moyeu (74).

10. Un transporteur selon n'importe laquelle des revendications précédentes comprenant plusieurs desdits rouleaux de transporteur (18) montés sur ledit cadre de transporteur (14, 16), et plusieurs desdites roues de friction (82), dans lequel lesdites roues de friction (82) sont en contact avec et entraînent deux desdits rouleaux de convoyeur (68).

11. Un transporteur selon n'importe laquelle des revendications 8 à 10 dans lequel chacun desdits rouleaux de transporteur (18) a un arbre de support (20) qui chevauche des encoches (86) pratiquées sur ledit cadre du convoyeur (14, 16), de façon que le poids de chaque rouleau de convoyeur (18) soit porté sur ladite roue de friction (82) de telle manière que la force de friction exercée entre la roue de friction (82) et le moyeu (74) augmente quand le poids des articles présents sur les rouleaux de transporteurs (18) augmente.
